# EUROPEAN PATENT APPLICATION

(11) **EP 4 683 305 A1**
(43) Date of publication of application: **21.01.2026**
(21) Application number: 23935094.5
(22) Date of filing: 04.12.2023
(51) Int. Cl.: H04L 67/141

(54) **MESSAGE TRANSMISSION METHOD AND APPARATUS**

(30) Priority: 28.04.2023 CN 202310483155
(71) Applicant: Huawei Technologies Co., Ltd., Shenzhen, Guangdong 518129 (CN)
(72) Inventor: QU, Xiangfeng, Shenzhen, Guangdong 518129 (CN); CHENG, Zhongwu, Shenzhen, Guangdong 518129 (CN); LI, Bing, Shenzhen, Guangdong 518129 (CN); CHENG, Chuanning, Shenzhen, Guangdong 518129 (CN); TAN, Kun, Shenzhen, Guangdong 518129 (CN)
(74) Representative: Huawei European IPR
(86) International application number: PCT/CN2023/136178
(87) International publication number: WO 2024/221927

(57) **Abstract**

This application provides a packet transmission method, applied to a first device. The first device includes a transport layer and a transaction layer, and the method includes: The first device receives a packet that is of a first application and that is to be sent to a second device; the first device determines whether a transport TP connection is established between the transport layer of the first device and a transport layer of the second device; and when at least one TP connection has been established between the transport layer of the first device and the transport layer of the second device, the first device determines that the at least one TP connection is used to transmit the packet of the first application, where the at least one TP connection is a TP connection established by the first device to transmit a packet of a second application. According to the packet transmission method, packets of different applications may be transmitted over a same TP connection, and there is no need to respectively establish reliable connections for different applications. This can reduce resource overheads required for establishing connections.

## Description

This application claims priority to Chinese Patent Application No. 202310483155.4, filed with the China National Intellectual Property Administration on April 28, 2023 and entitled "PACKET TRANSMISSION METHOD AND APPARATUS", which is incorporated herein by reference in its entirety.

### TECHNICAL FIELD

Embodiments of this application relate to the field of computer technologies, and in particular, to a packet transmission method and apparatus.

### BACKGROUND

In an application scenario of cross-network communication of communication devices, a requirement for a network is embodied in two key indicators: a high throughput and a low latency. To implement the high throughput and the low latency, a remote direct memory access (Remote Direct Memory Access, RDMA) technology is generally used in the industry to replace a conventional transmission control protocol (Transmission Control Protocol, TCP) technology, so as to reduce a latency and reduce usage of a data center central processing unit (Central Processing Unit, CPU).

Currently, an InfiniBand (InfiniBand, IB) technology RDMA protocol and an RDMA technology based on Ethernet physical layer transmission (RDMA over Converged Ethernet, RoCE) are mainstream RDMA technologies in the industry, and are widely used in the high-performance data center interconnect field. IB and RoCE are network protocols designed for RDMA. IB and RoCE support a reliable connection (Reliable Connection, RC) mode. In the RC mode, messages arrive in sequence and are delivered reliably. However, a larger network scale in the RC mode indicates more required RC connections and higher resource consumption. Therefore, how to reduce a quantity of RC connections becomes an urgent problem to be resolved.

### SUMMARY

Embodiments of this application provide a packet transmission method, applied to a first device. Packets of different applications (for example, a first application and a second application) in the first device may be transmitted by sharing a connection, to reduce a quantity of connections.

According to a first aspect, a packet transmission method is provided, and is applied to a first device. The method may be performed by the first device, or may be performed by a circuit configured in the first device. This is not limited in this application. For convenience, the following uses an example in which the first device performs the method for description. The first device includes a transaction layer and a transport layer, and the packet transmission method includes:

The transport layer of the first device receives a packet from the transaction layer of the first device, where the packet is a packet that is of a first application and that is to be sent to a second device; the transport layer of the first device sends first indication information to the transaction layer of the first device when at least one first transport TP connection has been established between the transport layer of the first device and a transport layer of the second device, where the first indication information indicates that the at least one first TP connection is used to transmit the packet of the first application; and the transport layer of the first device sends the packet of the first application to the transport layer of the second device over the at least one first TP connection, where the at least one first TP connection is a TP connection used by the transport layer of the first device to transmit a packet of a second application.

Based on the foregoing technical solution, after receiving the packet that is of the first application and that is to be sent to the second device, the transport layer of the first device determines whether there is an established transport connection between the transport layer of the first device and the transport layer of the second device. If there is the established transport connection, the packet of the first application may be sent to the transport layer of the second device over the established transport connection, and there is no need to re-establish a connection for the packet of the first application. The established transport connection is a connection established by the transport layer of the first device for the packet of the second application. In the packet transmission method, different applications may share a transport connection, and there is no need to establish different connections for all the applications. Therefore, a quantity of connections can be reduced, and resources required for establishing connections can be saved.

With reference to the first aspect, in some implementations of the first aspect, when no TP connection is established between the transport layer of the first device and the transport layer of the second device, the method further includes: The transport layer of the first device obtains internet protocol IP address information of the second device; and the transport layer of the first device establishes at least one second TP connection between the transport layer of the first device and the transport layer of the second device based on the IP address information of the second device, where the at least one second TP connection is used to transmit the packet of the first application.

Based on the foregoing technical solution, after the transport layer of the first device receives the packet that is of the first application and that is to be sent to the second device, when determining that no transport connection has been established between the transport layer of the first device and the transport layer of the second device, the transport layer of the first device may obtain the IP address information of the second device, and establish, in a timely manner based on the obtained IP address information, the transport connection required for packet transmission, to ensure timeliness of packet transmission. It should be noted that, after the at least one second TP connection is established between the transport layer of the first device and the transport layer of the second device, if the transport layer of the first device receives a packet that is of a third application and that is to be sent to the second device, the packet of the third application may be transmitted over the at least one second TP connection, and there is no need to establish a different connection for the third application. Therefore, the quantity of connections can be reduced, and resources required for establishing the connection can be saved.

With reference to the first aspect, in some implementations of the first aspect, that the transport layer of the first device sends the packet of the first application to the transport layer of the second device over the at least one first TP connection includes: The transport layer of the first device sends the packet of the first application to the transport layer of the second device over a TP connection with lightest load in the at least one first TP connection.

Based on the foregoing technical solution, the transport layer of the first device may select the TP connection with the lightest load to transmit the packet, to implement load balancing.

With reference to the first aspect, in some implementations of the first aspect, the method further includes: The transport layer of the first device receives an acknowledgment message from the transport layer of the second device, where the acknowledgment message indicates whether the packet of the first application is successfully executed by a transaction layer of the second device.

Based on the foregoing technical solution, the second device may send, to the transport layer of the first device via the transport layer of the second device, the acknowledgment message indicating whether the packet is successfully executed by the transaction layer of the second device. This can report, in a timely manner, a blocking problem caused when a plurality of applications share a transport connection to transmit the packet.

With reference to the first aspect, in some implementations of the first aspect, if the acknowledgment message is a transaction acknowledgment TAACK, the acknowledgment message indicates that the transaction layer of the second device successfully executes the packet of the first application, and the method further includes: The transport layer of the first device sends a completion queue entry CQE to the transaction layer of the first device, where the CQE indicates that the packet of the first application is successfully transmitted.

With reference to the first aspect, in some implementations of the first aspect, if the first response message is a transaction negative acknowledgment TANAK, the first response message indicates that the transaction layer of the second device fails to execute the packet of the first application, and the method further includes: The transport layer of the first device sends the TANAK to the transaction layer of the first device; and the transport layer of the first device receives the packet of the first application from the transaction layer of the first device, and resending the packet of the first application to the transport layer of the second device.

Based on the foregoing technical solution, if the transaction layer of the second device fails to receive the packet of the first application, the transport layer of the first device may retransmit the packet of the first application, to implement reliable transmission.

With reference to the first aspect, in some implementations of the first aspect, that the transport layer of the first device receives the packet from the transaction layer of the first device includes: The transport layer of the first device receives a send queue entry SQE from the transaction layer of the first device, where a destination address of the SQE is an address of the second device, and the SQE carries the packet that is of the first application and that is sent to the second device.

With reference to the first aspect, in some implementations of the first aspect, that the transport layer of the first device receives the SQE from the transaction layer of the first device includes: The transport layer of the first device receives the SQE from at least one transmit interface of the first device.

With reference to the first aspect, in some implementations of the first aspect, before the transport layer of the first device sends the packet of the first application to the transport layer of the second device over the at least one first TP connection, the method further includes: The transport layer of the first device determines the at least one first TP connection based on a destination entity identifier DEID carried in the SQE.

According to a second aspect, a packet transmission apparatus is provided. The apparatus includes: a storage module, configured to store a program; and a processing module, configured to execute the program stored in the storage module. When the program stored in the storage module is executed, the processing module is configured to perform the method provided in the first aspect.

According to a third aspect, a computer-readable storage medium is provided. The computer-readable medium stores program code used by a device for execution, and the program code includes instructions for performing the method provided in the first aspect.

According to a fourth aspect, a computer program product including instructions is provided. When the computer program product runs on a computer, the computer is enabled to perform the method provided in the first aspect.

According to a fifth aspect, a chip is provided. The chip includes a processing module and a communication interface. The processing module reads, through the communication interface, instructions stored in a memory, to perform the method provided in the first aspect.

Optionally, in an implementation, the chip may further include a storage module. The storage module stores instructions. The processing module is configured to execute the instructions stored in the storage module. When the instructions are executed, the processing module is configured to perform the method provided in the first aspect.

According to a sixth aspect, a chip is provided. The chip includes a first device configured to perform the method provided in the first aspect and a second device configured to receive a packet.

According to a seventh aspect, a computer device is provided. The computer device includes the chip shown in the sixth aspect. For example, the computer device includes but is not limited to a switch or a server in a data center.

According to an eighth aspect, a terminal device is provided. The terminal device includes the chip shown in the sixth aspect. For example, the terminal device includes but is not limited to a terminal like a mobile phone or a vehicle.

According to a ninth aspect, a packet transmission system is provided. The system includes a first device configured to perform the method provided in the first aspect and a second device configured to receive a packet.

### BRIEF DESCRIPTION OF DRAWINGS

FIG. 1 is a diagram of a structure of a computer device according to an embodiment of this application;
FIG. 2 is a diagram of a data center according to an embodiment of this application;
FIG. 3 is a diagram of a universal bus protocol packet format according to an embodiment of this application;
FIG. 4 is a diagram of structures of hosts according to an embodiment of this application;
FIG. 5 is a schematic flowchart of a packet transmission method according to this application;
FIG. 6 is a diagram of establishing a TPG between transport layers of two devices according to this application;
FIG. 7 is a diagram of writing a plurality of SQEs into one JFS according to this application;
FIG. 8 is a diagram of load balancing according to this application;
FIG. 9 is a schematic flowchart of another packet transmission method according to this application;
FIG. 10 is a diagram of a structure of a packet transmission apparatus 1000 according to an embodiment of this application;
FIG. 11 is a diagram of a structure of a chip system 1100 according to an embodiment of this application; and
FIG. 12 schematically shows a conceptual partial view of a computer program product according to an embodiment of this application.

### DESCRIPTION OF EMBODIMENTS

The following describes technical solutions of embodiments in this application with reference to accompanying drawings.

In many applications, a computer device on which an application is deployed needs to access data, to implement a function of the application. For example, a computer device on which a database application is deployed needs to access a large amount of data to update data in a database, or return a query result to a user in response to a data query request. For another example, a computer device on which a web application is deployed needs to access a large amount of data, to return requested content to a user.

The computer device may be a server or a terminal. The terminal includes but is not limited to user equipments such as a desktop computer, a notebook computer, and a smartphone. For ease of understanding, the following describes a structure of the computer device.

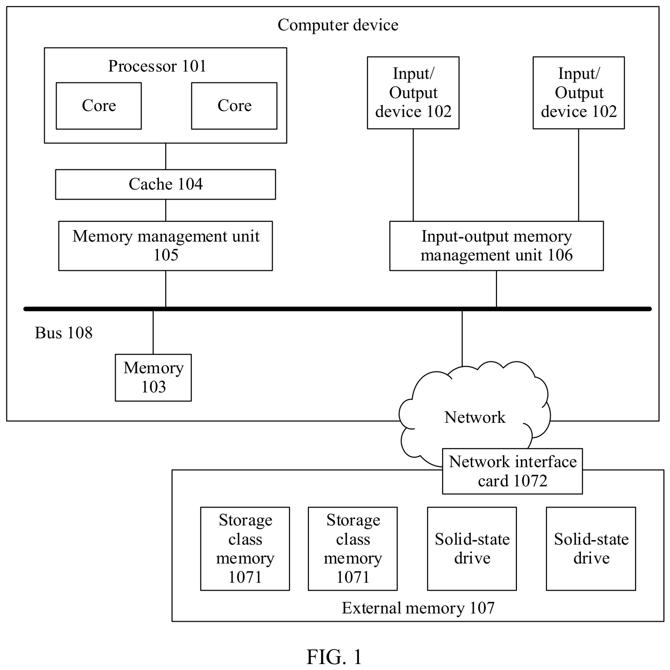

Refer to a diagram of a structure of a computer device shown in FIG. 1. The computer device includes a processor 101, an input/output device (input/output device, I/O device) 102, a memory 103, a cache 104, a memory management unit (memory management unit, MMU) 105, an input-output memory management unit (input-output memory management unit, IOMMU) 106, an external memory 107, and a bus 108.

The processor 101 includes at least one core (core). The core is also referred to as a computing engine. Each core may independently execute a task. When the processor 101 includes a plurality of cores, tasks from an application may be classified, so that the application can make full use of the plurality of cores to execute more tasks within specific time. In this embodiment, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus pen, or a microphone, and the output device may include a device like a display or a speaker.

The memory 103 is also referred to as an internal memory or a main memory, and is configured to temporarily store operation data in the processor 101. Further, the memory 103 is further configured to temporarily store data exchanged with the external memory 107. The memory 103 may be generally implemented by using a storage medium like a dynamic random access memory DRAM or a static random access memory (static random access memory, SRAM).

The cache 104 (in this embodiment, the cache is a processor cache, for example, a CPU cache) is a component configured to reduce average time required for the processor 101 to access the memory 103. Refer to FIG. 1. In a pyramid storage system, the cache 104 is located at a second layer from top to bottom, is only lower than a register (not shown in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input-output memory management unit 106 is essentially a memory management unit. Similar to that the memory management unit 105 maps a virtual address visible to the processor 101 to a physical address, the input-output memory management unit 106 is configured to map a virtual address (which may also be referred to as a device address or an I/O address) visible to the input/output device 102 to a physical address.

The external memory 107 is also referred to as an external storage or a secondary memory, and is usually configured to persistently store data. For example, the external memory 107 may persistently store the operation data in the processor 101. Even if power supply is abnormal, data that has been written into the external memory 107 can still be stored. This avoids a data loss. During specific implementation, the external memory 107 includes at least one non-volatile memory 1071. When the external memory includes a plurality of non-volatile memories, the plurality of non-volatile memories may be of a same type, or may be of different types. For example, in an example of FIG. 1, the external memory 107 may include two types of non-volatile memories, for example, a storage class memory (storage class memory, SCM) and a solid-state drive (solid-state drive, SSD).

The bus 108 is configured to connect functional components of the computer device. The bus 108 is a public communication backbone for transmitting information between the functional components of the computer device. The bus 108 may be a transmission wire bundle formed by wires. The bus 108 may be further classified into an internal bus and an external bus based on different connection objects.

The internal bus uses an internal bus protocol to transmit information. The internal bus protocol includes a bus protocol used to access memory space of the computer device. The external bus uses an external bus protocol to transmit information. The external bus protocol includes a bus protocol used to access external memory space of the computer device. The memory space is address space of the memory, and the external memory space is address space of the external memory.

In some embodiments, the internal bus protocol includes but is not limited to a peripheral component interconnect (peripheral component interconnect, PCI) bus, a peripheral component interconnect express (PCI Express, PCIe) protocol, a quickpath interconnect (Intel^{®} QuickPath Interconnect, QPI) protocol, and a universal bus (Unified Bus, UB) protocol. The external bus protocol includes but is not limited to a small computer system interface (small computer system interface, SCSI) protocol or a serial attached small computer system interface (Serial Attached SCSI, SAS) protocol.

It should be noted that the computer device shown in FIG. 1 is described by using an example in which the external memory 107 is a remote external memory. As shown in FIG. 1, the external memory 107 includes a network interface card 1072. The network interface card 1072 may be, for example, a smart network interface card NIC (that is, a network adapter card). The external memory 107 accesses a network via the network interface card 1072, and is further connected to another component of the computer device 101 over the network. The network may be a wired communication network, for example, an optical fiber communication network, or may be a wireless communication network, for example, a wireless local area network (wireless local area network, WLAN) or a fifth generation (fifth generation, 5G) mobile communication network.

In some possible implementations, the external memory 107 of the computer device may alternatively be a local external memory, and another component of the computer device, for example, the processor 101, may be connected to the local external memory through the bus 108. In some other possible implementations, the computer device may include both a remote external memory and a local external memory. In addition, this embodiment of this application is applicable to a centralized storage scenario or a distributed storage scenario. This is not limited in this embodiment.

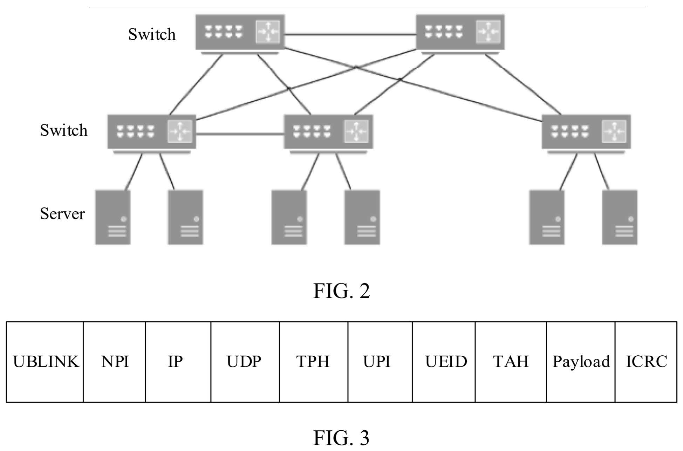

This application mainly relates to cross-network data transmission. For example, this application is applied to a server cluster that needs to communicate across networks, for example, a data center shown in FIG. 2. An internal structure of a switch or a server shown in FIG. 2 is shown in FIG. 1 above.

In addition, a packet transmission device in this application supports a universal bus (Unified Bus, UB) protocol, and a transport layer connection may be established between devices. The universal bus protocol may also be referred to as a Lingqu bus or a unified bus, and is a bus protocol standard. A name of the universal bus is not limited in this application.

The universal bus protocol breaks existing protocol barriers and eliminates unnecessary conversion overheads, thereby achieving an ultra-low latency. The universal bus protocol defines an independent transaction layer and transport layer. There is a connection between transport layers, but no connection between transaction layers. All transactions in a host are carried on one transport layer. The universal bus protocol includes the transport layer and the transaction layer. The transport layer is responsible for retransmission of a lost packet in a network to ensure reliable transmission, and the transaction layer processes different transactions. The transport layer receives a packet from the network, strips a transport header, and forwards a packet without the transport header to the transaction layer.

FIG. 3 shows a universal bus protocol packet format. Specifically, field definitions in the universal bus protocol packet format are shown in Table 1:

**Table 1**

| Name (name) | Description (description) |
|---|---|
| UB link (UBLINK) layer | Link (LINK) layer defined in the UB protocol, where the UBLINK may also be replaced with Ethernet MAC, and this form is defined as UB over Ethernet in the UB protocol |
| Network partition ID (Network Partition ID, NPI) | Used for physical network isolation |
| IP | IP protocol header |
| User datagram protocol (User Datagram Protocol, UDP) | UDP protocol header, where a UDP destination port equal to 4792 indicates a UB packet, and the UDP is followed by a transport header (Transport Header, TPH) |
| TPH | Transport header, including content such as a TP opcode, a source TPN, a destination TPN, and a packet sequence number (Packet Sequence Number) |
| UB partition ID (UB partition ID, UPI) | Used for tenant isolation |
| UB entity ID (UB Entity ID, UEID) | Including a source entity identifier (Source Entity ID) and a destination entity identifier (Destination Entity ID), where |
| | a bit width of the entity ID is 128 bits and is unique in the entire network, and an entity identifier (EID) may represent a virtual machine, or may represent an SSD controller |
| Transaction header (Transaction Header, TAH) | Transaction header, including a TA opcode (indicating a transaction operation type like send, read, write, atomic, or transaction acknowledgment), a destination JFR number, a transaction layer segment sequence number (Segment Sequence Number, TASSN), a read/write address, a length, and the like |

Specifically, an interaction interface between the transaction layer of the universal bus protocol and an application is referred to as a Jetty. A message of the application may be sent to any destination through one Jetty, or a message from any source may be received through one Jetty. A Jetty that can be used for only sending is defined as a (Jetty For Send, JFS), and a Jetty that can be used for only reception is defined as a (Jetty For Receive, JFR).

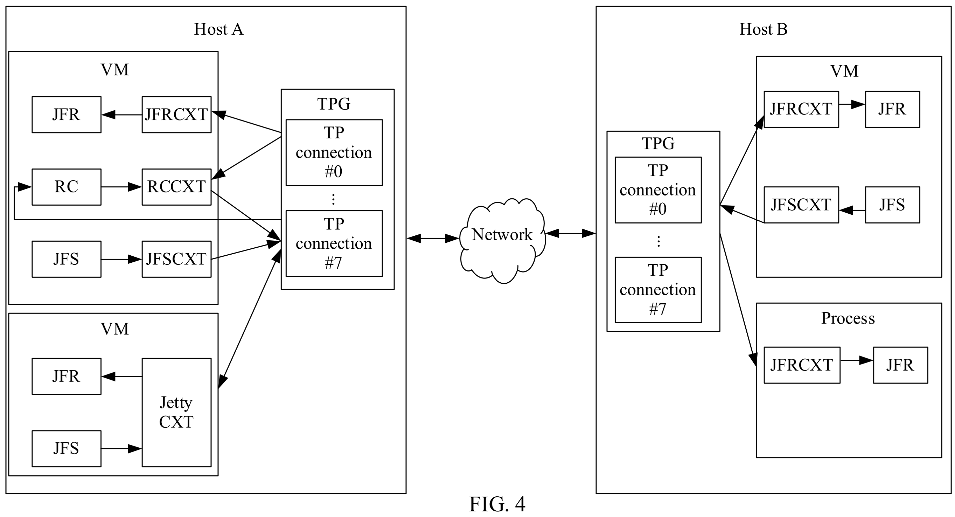

FIG. 4 is a diagram of structures of hosts according to an embodiment of this application. The hosts (for example, a host A and a host B that are shown in FIG. 4) may be applied to the application scenario of cross-network communication shown in FIG. 2. As shown in FIG. 4, the host A includes several virtual machines (Virtual Machine, VM), and one VM includes several processes and several remote command (Remote Command, RC) tables, and is configured to receive a remote read command. One process includes several communication interfaces (for example, Jetties shown in FIG. 4), a communication interface that can be used for only sending (for example, a JFS shown in FIG. 4), and a communication interface that can be used for only sending (for example, a JFR shown in FIG. 4). The Jetty is bidirectional and can perform both reception and sending, the JFS is unidirectional and can perform only sending, and the JFR is unidirectional and can perform only reception.

The Jetty, the JFS, the JFR, and an RC have respective contexts (context, CXT). The Jetty, the JFS, the JFR, and the RC belong to a transaction layer. Several transport (Transport, TP) connections (for example, a total of eight TP connections from a TP connection #0 to a TP connection #7 shown in FIG. 4) are established between the two hosts. The eight TP connections may form a transport group (Transport Group, TPG), and all traffic between the two hosts passes through the TPG. The eight TP connections may be distributed on different physical ports. The traffic is evenly sent among the eight TP connections to implement multi-port multi-path. The TP connection and the TPG belong to a transport layer. A packet loss may occur in a network when the two hosts communicate over the network. In this case, the TP connection is responsible for retransmission of a lost packet in the network, to ensure end-to-end reliability. The TP connection is responsible for end-to-end congestion control.

In FIG. 4, the host B includes several VMs and several processes (process). The VM and an SSD controller belong to the transaction layer.

The foregoing briefly describes, with reference to FIG. 1 to FIG. 4, the scenario to which this application can be applied and the internal logical units of the host. For ease of understanding embodiments of this application, some basic concepts in this application are briefly described.
1. Packet sequence number (packet sequence number, PSN): When sending packets, a transport layer of a transmitter adds a PSN to each packet. The PSNs increase by packet. After receiving the packet, a receiver returns a TPACK (carrying the PSN of the received packet) to notify the transport layer of the transmitter that the packet has been correctly received. If the receiver receives a packet and finds that a packet whose PSN is smaller than a PSN of the packet is not received, the receiver determines that 'the packet whose PSN is smaller than the PSN of the packet' is lost in a network and returns a TPSACK (carrying the PSN of the received packet and the PSN of the lost packet). After receiving the TPSACK, the transport layer of the transmitter retransmits the lost packet.
2. Segment sequence number (Segment sequence number, SSN): A message at a transaction layer may be large, for example, 16 MB. In a UB protocol, a plurality of transaction layers share one transport layer. To prevent a message at a transaction layer from occupying a transport connection for a long time, when sending the message to the transport layer, the transaction layer divides the message into a plurality of segments, for example, a segment of 64 KB, and one transaction layer sends only one segment to the transport layer each time.
3. Transaction acknowledgment (Transaction ACK, TAACK): After a receiver receives a complete segment (the segment is split into a plurality of packets at a transport layer) and correctly executes the segment (for example, the segment is correctly read and written into a memory), the receiver returns a TAACK to notify a transaction layer of a transmitter that the segment has been correctly executed. Alternatively, after successfully receiving a message from a transmitter, the receiver returns a TAACK to notify a transaction layer of the transmitter that the message has been successfully received.
4. Transaction negative acknowledgment (Transaction No OK ACK, TANAK): When a receiver receives a segment and an execution error occurs (for example, a page fault occurs when the segment is read or written into a memory), the receiver returns a TANAK to notify a transaction layer of a transmitter to retransmit the segment. Alternatively, if a receiver fails to receive a message from a transmitter, the receiver returns a TANAK to notify a transaction layer of the transmitter to retransmit the message.
5. Remote direct memory access (Remote Direct Memory Access, RDMA): Data is directly transferred to a storage area of a computer over a network. The data is quickly moved from a system to a remote system memory without intervention of operating systems or kernels of two computer devices. Overheads of external memory replication and context switching are eliminated in RDMA, to free up memory bandwidth and a CPU cycle to improve application system performance.
6. Reliable connection (Reliable Connection, RC): One queue pair (Queue Pair, QP) is connected to only another QP. A message is reliably transmitted from a send queue of one QP to a receive queue of another QP. Data packets are delivered in sequence. The RC connection is similar to a TCP connection.
   Specifically, during RDMA, before establishing an RC connection, two parties first create contexts, and create protection domains (Protection Domain, PD) to associate queue pair QPs with memory regions (Memory Region, MR). Then, the two parties create the QPs. Each QP includes two first in first out (first in first out, FIFO) work queues: a send queue (send Queue, SQ) used for sending a request, and a receive queue (receive Queue, RQ) used for receiving a request. Each of the two work queues is associated with a completion queue (Completion Queue, CQ). To allow an RDMA network interface card to have access to a memory, the memory needs to be registered. This type of memory that can be arbitrarily accessed by the both parties is referred to as a memory that supports RDMA access, and a remote address is a start virtual address of the memory region. After the MRs are created, 8-byte keys are generated. The both parties should exchange their keys and a virtual address of the registered memory. Each MR includes a key of the MR (lkey) and a key of the remote memory (rkey). The rkey needs be used to access the remote registered memory. Generally, it takes about 10s to create 4096 connections via a native communication library of RDMA RDMA_CM. Average time required for creating each connection ranges from 1 ms to 5 ms. When load of RDMA is 32 bytes, a latency is about 4 µs each time. Consequently, to create the connections, sending of hundreds of network data packets needs to be delayed.
7. Page fault (Page fault): A page fault occurs when a virtual address is used to read from or write into a memory.
8. Process: A process is an activity performed regarding a data set by a program in a computer, is a basic unit for performing resource allocation by a system, and is a structural basis of an operating system. In an early process-oriented computer architecture, the process is a basic execution entity of a program. In a modern thread-oriented computer architecture, the process is a container for threads. The program is a description of an instruction, data, and an organizational form thereof. The process is a program entity. The process in the following may also be referred to as an application (application, APP).

In addition, for ease of understanding embodiments of this application, the following several descriptions are provided.

First, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not constitute any limitation on implementation processes of embodiments of this application. It should be understood that objects described in such a manner are interchangeable in proper cases, to describe solutions other than embodiments of this application. In addition, in embodiments of this application, words such as "S310" are merely identifiers for ease of description, and do not limit a sequence of performing steps.

Second, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Third, "store" in embodiments of this application may mean "stored in one or more memories". The one or more memories may be separately disposed, or may be integrated in an encoder, a decoder, a processor, or a communication apparatus. Alternatively, some of the one or more memories may be separately disposed, and some of the one or more memories may be integrated in a decoder, a processor, or a communication apparatus. A type of the memory may be a storage medium in any form. This is not limited in this application.

Fourth, in embodiments of this application, a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, "if" in embodiments of this application may be explained as "when" ("when" or "upon"), "in response to determining", or "in response to detecting". Similarly, based on the context, a phrase "if determining" or "if detecting (a stated condition or event)" may be interpreted as a meaning of "when determining", "in response to determining", "when detecting (the stated condition or event)", or "in response to detecting (the stated condition or event)".

Sixth, in embodiments of this application, the terms used in the descriptions of the various examples are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

The foregoing briefly describes, with reference to FIG. 2, the scenario to which the packet transmission method provided in this application is applicable, and describes the basic concepts in this application. In addition, the RC is introduced in the basic concepts. A larger networking scale indicates more required connections and higher resource consumption. For example, if there are N nodes (Host) in networking, each node has P processes, N*P*P RC connections need to be established for one node to implement full-mesh communication.

To resolve a current problem that a larger quantity of RC connections in RDMA-based networking results in higher resource consumption, this application provides an RDMA-based information transmission method, to reduce the quantity of RC connections in the networking according to a UB protocol. The following describes in detail the RDMA-based information transmission method provided in this application with reference to accompanying drawings.

It should be understood that the RDMA-based information transmission method provided in embodiments of this application may be applied to a computer system, for example, the cross-network communication system shown in FIG. 2.

It should be further understood that a specific structure of an execution body of the method provided in embodiments of this application is not particularly limited in the following embodiments, provided that a program that records code of the method provided in embodiments of this application can be run to implement the method provided in embodiments of this application. For example, the execution body of the method provided in embodiments of this application may be a device, or may be a functional module that is in the device and that can invoke a program and execute the program.

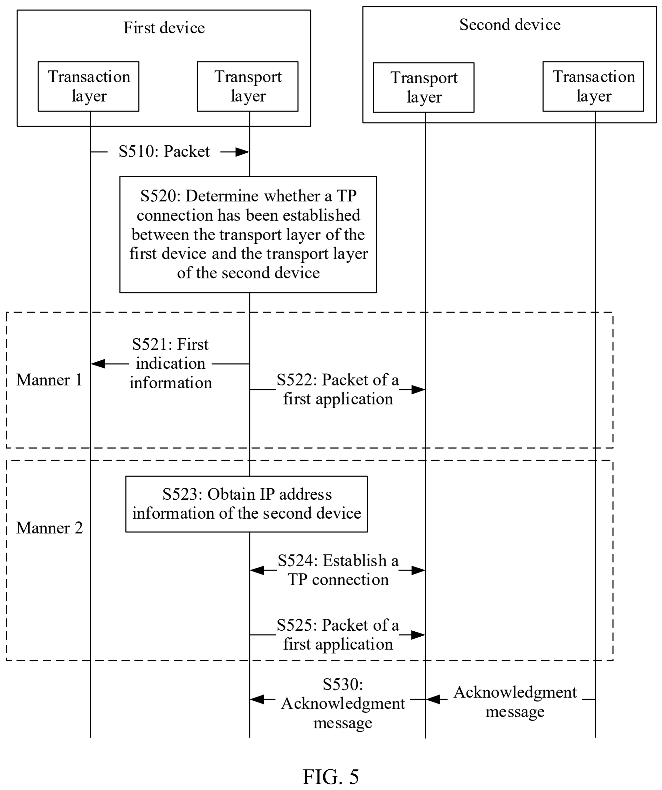

FIG. 5 is a schematic flowchart of a packet transmission method according to this application. The method is applied to a scenario in which a packet is transmitted between a first device and a second device, for example, the scenario shown in FIG. 2. In this embodiment, both the first device and the second device support a universal bus protocol, to be specific, the first device includes a transaction layer and a transport layer, and the second device includes a transaction layer and a transport layer.

Specifically, the method shown in FIG. 5 includes the following steps.

S510: The transport layer of the first device receives a packet from the transaction layer of the first device.

The packet is a packet of a first application that is to be sent to the second device.

In this embodiment, the first device and the second device may be any two computer devices in networking, and the first device and the second device may communicate with each other across networks. For example, the first device and the second device are two servers, or two switches, or one is a server and the other is a switch shown in FIG. 2. In this embodiment, specific forms of the first device and the second device are not limited, and the first device and the second device each may be any computer device that communicates across networks.

Specifically, in this embodiment, both the first device and the second device are computer devices that support the universal bus protocol. Therefore, the first device includes the transaction layer and the transport layer, and the second device also includes the transaction layer and the transport layer. At least one TP connection may be established between the transport layer of the first device and the transport layer of the second device. The at least one TP connection may form one TPG. As shown in FIG. 4, the first device may be the host A shown in FIG. 4, and the second device may be the host B shown in FIG. 4. The TPG established between the transport layer of the first device and the transport layer of the second device may be the TPG shown in FIG. 4, and may include eight TP connections (for example, a total of eight TP connections from the TP connection #0 to the TP connection #7 shown in FIG. 4). All information (including data, signaling, a packet, and the like) between the first device and the second device is transmitted by using the TPG.

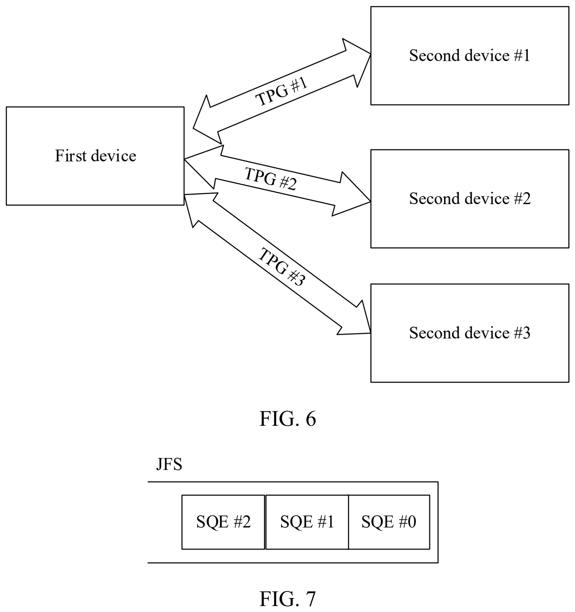

It should be understood that the TPG established between the transport layer of the first device and the transport layer of the second device is merely an example, and does not constitute any limitation on the protection scope of this application. A TPG may be established between transport layers of any two computer devices in the networking. For example, as shown in FIG. 6, the networking includes the first device, a second device #1, a second device #2, and a second device #3, and the transport layer of the first device may separately establish a TPG (for example, a TPG #1, a TPG #2, and a TPG #3 shown in FIG. 6) with a transport layer of the second device #1, a transport layer of the second device #2, and a transport layer of the second device #3.

Further, in this embodiment, after receiving the packet from the transaction layer of the first device, the transport layer of the first device determines whether the at least one first TP connection has been established between the transport layer of the first device and the transport layer of the second device. The method procedure shown in FIG. 5 further includes the following step.

S520: The transport layer of the first device determines whether the TP connection has been established between the transport layer of the first device and the transport layer of the second device.

Manner 1: The transport layer of the first device determines that the at least one first TP connection has been established between the transport layer of the first device and the transport layer of the second device.

For example, before the transport layer of the first device receives the packet of the first application from the transaction layer of the first device, the transport layer of the first device receives a packet of a second application from the transaction layer of the first device, establishes the at least one first TP connection with the transport layer of the second device to transmit the packet of the second application, and transmits the packet of the second application over the at least one first TP connection.

In the case shown in Manner 1, the transport layer of the first device may notify, based on first indication information, the transaction layer of the first device that the packet of the first application may be transmitted over the at least one first TP connection.

Specifically, in the case shown in Manner 1, the method procedure shown in FIG. 5 further includes the following steps.

S521: The transport layer of the first device sends the first indication information to the transaction layer of the first device.

The first indication information indicates that the at least one first TP connection is used to transmit the packet of the first application.

S522: The transport layer of the first device sends the packet of the first application to the transport layer of the second device over the at least one first TP connection.

It can be learned from the introduction of the universal bus protocol in the foregoing basic concepts that the universal bus protocol defines an independent transaction layer and transport layer. There is a connection between transport layers of two devices, and there is no connection between transaction layers. All transactions in one device are carried on one transport layer. Therefore, in this embodiment, packets of different applications may share a TP connection at a transport layer, so that a quantity of TP connections established between devices is far less than a quantity of connections (for example, an RC connection established based on an IB protocol) that need to be established. This can reduce a quantity of connections between the devices.

For example, there are N nodes in the networking, and each node has P applications. If interconnection communication is implemented based on an RC connection, one node needs to establish N*P*P RC connections. If interconnection communication is implemented based on a TP connection, one node only needs to establish N TP connections.

In addition, the TP connection is a persistent connection, and does not require dynamic disconnection or establishment. This avoids resource consumption caused by dynamic disconnection or establishment.

Manner 2: The transport layer of the first device determines that no TP connection is established between the transport layer of the first device and the transport layer of the second device.

For example, the packet that is of the first application and that is received by the transport layer of the first device is the first packet that needs to be transmitted to the second device. To transmit the packet of the first application, at least one second TP connection between the transport layer of the first device and the transport layer of the second device needs to be established, to transmit the packet of the first application.

In the case shown in Manner 2, the at least one second TP connection needs to be established between the transport layer of the first device and the transport layer of the second device, and the method procedure shown in FIG. 5 further includes the following steps.

S523: The transport layer of the first device obtains IP address information of the second device.

S524: The transport layer of the first device establishes the at least one second TP connection between the transport layer of the first device and the transport layer of the second device based on the IP address information of the second device.

The at least one second TP connection is used to transmit the packet of the first application.

S525: The transport layer of the first device sends the packet of the first application to the transport layer of the second device over the at least one second TP connection.

In the case shown in Manner 2, a process of establishing the at least one second TP connection between the transport layer of the first device and the transport layer of the second device may be understood as a shared connection establishment process. After the at least one second TP connection is established between the transport layer of the first device and the transport layer of the second device, if the transport layer of the first device receives a packet of a third application that is to be sent to the second device, the packet of the third application may be transmitted over the at least one second TP connection, and there is no need to establish a different connection for the third application. Therefore, the quantity of connections can be reduced, and resources required for establishing the connection can be saved.

Specifically, the shared connection establishment process may be understood as follows: When a packet of an application needs to be transmitted, a URMA software stack determines an IP address of a peer device based on a target EID (Target EID), and then a transmission channel connection establishment service in a UMDK negotiates with a URMA software stack connection establishment service of an external node to exchange information such as PSNs and paths, so as to complete establishment of a transmission channel between IP addresses of the two ends.

It should be noted that, to reduce resource overheads, the URMA software stack provides a plurality of levels of transmission channel sharing policies, including but not limited to:

Device-granularity sharing: All applications and VMs share a transmission channel between two devices.

VM-granularity sharing: Different applications in each VM share a transmission channel.

Intra-application sharing: Different Jetties share a transmission channel in an application.

Jetty exclusive: Each Jetty uses an independent shared transmission channel in an application.

This application mainly relates to the device-granularity sharing, to be specific, all the applications and VMs share the transmission channel between the two devices. For example, in the case shown in Manner 2, establishing the TP connection between the transport layer of the first device and the transport layer of the second device to exchange communication information includes the following several possible implementations:
In a possible implementation, the first device uses a service channel or an existing IP/TCP connection to exchange a communication relationship, for example, to obtain segment information or Jetty information on a second device side, which is referred to as out-of-band exchange.

In another possible implementation, the first device interacts with the second device based on message semantics of a well-known Jetty of URMA, to obtain segment information or Jetty information on a second device side, which is referred to as in-band exchange. The well-known Jetty of the URMA means that the second device may specify a Jetty number when creating the Jetty, and the first device may obtain the well-known Jetty number in an agreement or configuration manner, and then use a local Jetty to interact with the well-known Jetty on the second device side.

For ease of understanding, the following describes, with reference to a specific example, a procedure of establishing the TP connection between the transport layer of the first device and the transport layer of the second device.

Example 1: Establishing the TP connection between the transport layer of the first device and the transport layer of the second device includes the following steps.

Step 1: An application #1 on a first device side obtains home_seg information (for example, an EID of the second device) of an application #2 on the second device side. An obtaining manner is the out-of-band exchange or in-band exchange described above.

Step 2: When the application #1 on the first device side invokes a function (for example, invokes urma_import_seg()), a kernel is trapped into.

Step 3: The URMA software stack checks the EID of the second device to determine whether a TP is established between the first device and the second device. If the TP is established between the first device and the second device, the URMA software stack directly places a TP number (TP Number, TPN) in a target seg data structure.

Step 4: If no TP is established between the first device and the second device, continue to perform the following step 5 to step 9.

Step 5: The first device obtains the IP address of the second device based on the EID of the second device. When a physical function (Physical Function, PF) is used, the EID and the IP address are the same and may be directly converted. When a multi-path (Multi-path) device is used, the EID is equivalent to a host name (host name). A plurality of IP addresses may be obtained by querying a table or obtained by a DNS.

Step 6: Create a link establishment channel, where a TCP socket is established based on the well-known Jetty of the first device and the second device, or the obtained IP address.

Step 7: The first device sends a link establishment request to the second device through the link establishment channel, to negotiate initial information of the transport (Transport) layer.

Optionally, content of a link establishment request packet includes a TPN, an initial PSN, an IP address, an identity credential, a link establishment policy and a parameter (for example, src/dst EID), a congestion control policy and a parameter, and the like of the first device.

Optionally, content of a link establishment response packet includes a TPN, the IP address, and the like of the second device.

Step 8: The first device records a mapping relationship between the EID of the second device and the TPN, and the second device records a relationship between an EID of the first device and the TPN. The first device returns the TPN and places the TPN in the target seg data structure.

Step 9: Link establishment is completed.

Optionally, if the TPG is created, a plurality of groups of link establishment information are transmitted in the link establishment request packet at a time, and a plurality of TP connections are established in batches.

In addition, in this embodiment, to share a physical transmission channel by different VMs to save resources, the physical transmission channel is maintained in a host (Host), and the physical transmission channel does not need to be established in the VM. The VM only needs to notify a link establishment service (a TP Service) of the host of completing establishment of the physical transmission channel. Specifically, when a URMA software stack in the VM establishes the transmission channel, a UBN device is defined as supporting an offloading (Offloading) capability. In this case, the URMA software stack in the VM does not perform link establishment. The URMA software stack sends a transmission channel establishment request to a UBN device driver. Hardware sends the transmission channel establishment request to a URMA software stack link establishment service on the host via a mailbox (Mailbox), allocates a virtual transmission channel (virtual TP, vTP) to the VM, creates a mapping relationship between the vTP and the physical transmission channel TP or TPG, and then returns the vTP to the URMA software stack in the VM via the mailbox. Subsequently, the URMA software stack in the VM may use the vTP for communication.

It can be learned from Manner 1 and Manner 2 that, in this embodiment, after the transport layer of the first device receives the packet of the first application that is to be sent to the second device, if it is determined that the at least one first TP connection has been established between the transport layers of the first device and the second device, the packet may be directly sent to the transport layer of the second device over the at least one first TP connection. If it is determined that no connection has been established between the transport layers of the first device and the second device, the at least one second TP connection used to transmit the packet of the first application needs to be established. For ease of description, the following uses an example in which the packet of the first application is transmitted over the at least one first TP connection for description.

Specifically, when the transaction layer of the first device needs to send the packet of the first application to the second device, the packet of the first application is carried by a send queue entry (Send Queue Entry, SQE), and a destination address of the SQE is an address of the second device. For example, the destination address of the SQE is an IP address of the second device. The IP address of the second device may be an entity ID of a virtual machine in the second device.

It should be understood that when TP connections are established between the transport layer of the first device and transport layers of a plurality of different devices, an application of the first device may send packets to the different devices. For example, one application of the first device needs to separately send three packets to three different devices (for example, the application of the first device needs to separately send packets to the second device #1, the second device #2, and the second device #3 that are shown in FIG. 6), and the three packets are respectively carried by an SQE #0, an SQE #1, and an SQE #2. A destination of the SQE #0 is the second device #1, a destination of the SQE #1 is the second device #1, and a destination of the SQE #2 is the second device #1. Specifically, the application of the first device does not sense the TP connection at the transport layer, and only needs to specify a destination in a corresponding SQE.

In this embodiment, the application of the first device may write the SQE into a JFS. Optionally, if the application of the first device needs to separately send different packets to different devices, a plurality of SQEs may be written into a same JFS. For example, as shown in FIG. 7, the application of the first device writes the SQE #0, the SQE #1, and the SQE #2 whose destinations are respectively the second device #1, the second device #2, and the second device #3 into a same JFS.

Specifically, after the application of the first device writes the SQE into the JFS, the SQE may be invoked from the JFS and sent to the transport layer of the first device. The transport layer of the first device finds a corresponding TPG based on a destination entity identifier (Destination Entity ID, DEID) in the SQE, and sends the SQE to the corresponding TPG.

For example, the SQE #0, the SQE #1, and the SQE #2 are written into the JFS, where a DEID in the SQE #0 corresponds to the TPG #1, a DEID in the SQE #1 corresponds to the TPG #2, and a DEID in the SQE #3 corresponds to the TPG #3. In this case, after receiving the SQE #0, the transport layer of the first device may determine, based on the DEID in the SQE #0, to transmit the SQE #0 over a TP connection in the TPG #1, and may transmit the SQE #0 to a correct destination.

Optionally, when a plurality of SQEs are written into one JFS, the plurality of SQEs may be invoked in parallel from the JFS (for example, a plurality of TPGs are invoked in parallel from the SQE), and are sent to different devices.

For example, that the transport layer of the first device sends the packet of the first application to the transport layer of the second device over the at least one first TP connection includes:
The transport layer of the first device sends the packet of the first application to the transport layer of the second device over a TP connection with lightest load in the at least one first TP connection.

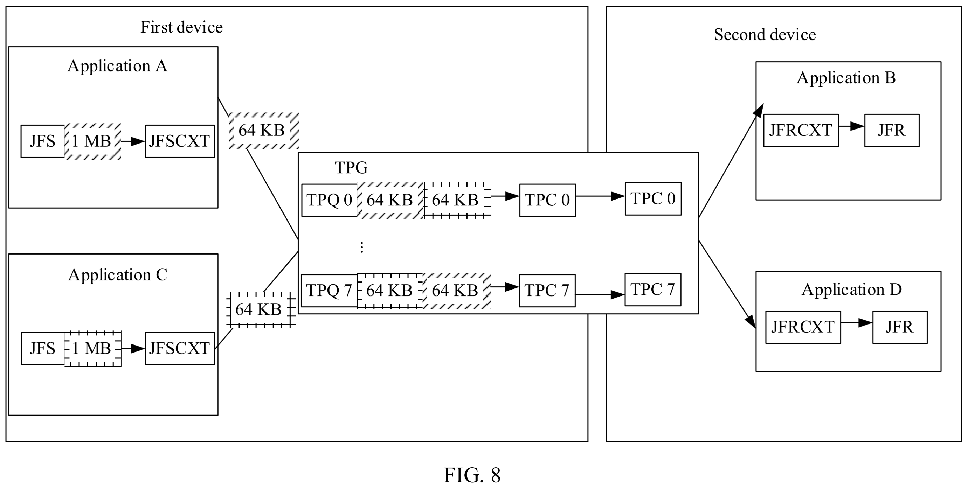

For example, as shown in FIG. 8, eight TP connections are established between the transport layer of the first device and the transport layer of the second device, and each TP connection has a respective TP queue (TP Queue) and TP context (TP context). An application A and an application C of the first device each need to send a 1 MB message to the second device, and the application A and the application C do not sense a quantity of TP connections included in a TPG. The JFS of the first device may split the 1 MB message into 16 64 KB segments, and send one segment to the TPG each time. The TPG selects a TP connection with lightest load to send the segment. That is, load balancing of traffic is performed among a plurality of TP connections in the TPG, and a multi-port multi-path is fully used to reduce message transmission time.

Optionally, when a network packet loss occurs, the TP connection of the first device is responsible for retransmission. Therefore, it can be ensured that a reliable service is provided for an application process of the first device.

For example, after the transport layer of the first device sends the SQE to the transport layer of the second device, the transport layer of the second device may feed back an acknowledgment message to the transport layer of the first device, to notify the first device whether the SQE is successfully transmitted. In this case, the method procedure shown in FIG. 5 further includes the following step.

S530: The transport layer of the second device sends the acknowledgment message to the transport layer of the first device.

In a possible implementation, the acknowledgment message is a TAACK, indicating that the packet is successfully executed at the transaction layer of the second device. In this implementation, the transport layer of the first device sends the TAACK to the JFS of the first device. After receiving the TAACK, the JFS of the first device reports a completion queue entry (Completion Queue Entry, CQE) to the application process, to notify the application process that execution of the SQE is completed.

In another possible implementation, the acknowledgment message is a TANAK, indicating that the packet fails to be executed at the transaction layer of the second device. In this implementation, the transport layer of the first device sends the TANAK to the JFS of the first device. After receiving the TANAK, the JFS of the first device resends the SQE to the transport layer of the first device. The transport layer of the first device resends the packet of the first application to the transport layer of the second device.

In the packet transmission method shown in FIG. 5, a TP connection is established between a transmitter and a receiver, and a packet is transmitted over the TP connection. Compared with establishing an RC connection, a quantity of established connections can be reduced, thereby reducing resource consumption. In addition, one TPG includes a plurality of TP connections, and an application does not sense a quantity of TP connections included in the TPG. A transaction layer sends a transaction (for example, the foregoing SQE) to the TPG, and the transaction is transmitted evenly over the plurality of TP connections in the TPG. This implements multi-port multi-path, improves network utilization, and shortens transaction transmission time.

Further, network congestion control is implemented based on the TP connection. Different applications share a TP connection, lost packet retransmission, and congestion control. Compared with congestion control based on each QP in the IB, the congestion control based on the TP connection is more comprehensive, and helps reduce burst traffic in a network and network queuing. In addition, a transaction layer is separated from a transport layer. If the transaction layer is abnormal, retransmission is performed at the transaction layer, and the shared transport layer is not blocked.

For ease of understanding, the following describes a packet transmission procedure between the first device and the second device with reference to a specific example.

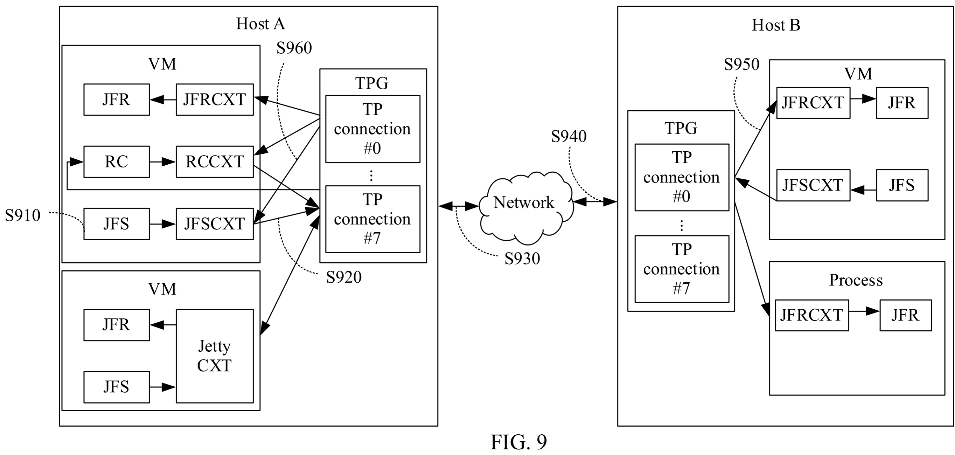

Example 2: As shown in FIG. 9, an information transmission procedure between the first device and the second device is described by using a transmission procedure of a send (Send) message as an example. Transmission of the send message includes the following steps.

S910: An application process of the first device delivers a 'send' transaction to a JFS.

S920: The JFS of the first device sends the 'send' transaction to the TPG, selects a TP connection with lightest load from the TPG, and encapsulates a TPH for the 'send' transaction.

S930: A link layer then encapsulates a link header for the 'send' transaction to obtain a packet obtained by using the 'send' transaction encapsulated according to the UB protocol, and sends the packet to the transport layer of the second device over a network.

S940: The transport layer of the second device receives the packet, if check of the packet succeeds, returns a TPACK (transport acknowledgment) to notify the transport layer of the first device 'that the packet has been correctly received', and if a packet loss is found in the network by checking a PSN in the TPH, returns a transport selective acknowledgment (Transport Selective ACK, TPSACK) to notify the transport layer of the first device 'that the packet has been correctly received, but the packet is lost, and the lost packet corresponding to the PSN needs to be retransmitted'.

S950: The transport layer of the second device parses the packet, and learns that a destination of the packet is a VM.

For example, the transport layer of the second device determines the destination of the packet by querying a DEID table. The transport layer of the second device strips the TPH and a part before the TPH from the packet, and forwards the remaining part to the VM.

S960: A JFR of the VM of the second device receives the packet, and performs check by using a UBMMU. If the packet is correctly written into a memory, a TAACK is generated and sent to the first device; or if a page fault occurs or the JFR has no resource to receive during memory writing, a TANAK is generated and sent to the first device. From the perspective of the transport layer of the second device, the TAACK and the TANAK are also transactions, and the transport layer of the second device also ensures that the TAACK and the TANAK reliably arrive at the first device.

The JFS of the first device receives the TAACK, and knows that the transaction has been correctly executed. In this case, the JFS of the first device generates a CQE to notify the application process. If the TANAK is received, it indicates that a page fault occurs or resources are insufficient on the second device side, the JFS of the first device retransmits the transaction.

It should be understood that the specific examples shown in FIG. 5 to FIG. 9 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on the implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

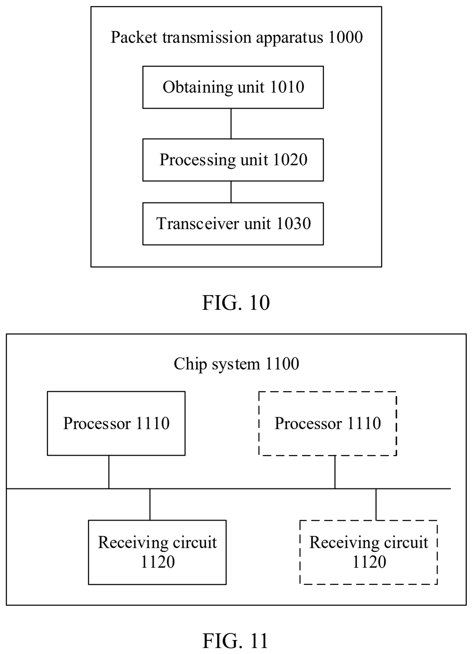

The following describes in detail a packet transmission apparatus provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmit device or a receive device may be divided based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. An example in which each functional module is obtained through division based on each corresponding function is used below for description.

FIG. 10 is a diagram of a structure of a packet transmission apparatus 1000 according to an embodiment of this application.

In an example, the packet transmission apparatus 1000 may be used in a first device, and the packet transmission apparatus 1000 may be configured to perform the foregoing packet transmission method, for example, configured to perform the method shown in FIG. 5. The packet transmission apparatus 1000 includes a transaction layer and a transport layer. Specifically, the packet transmission apparatus 1000 may include a transceiver unit 1010 and a processing unit 1020.

The transceiver unit 1010 is configured to receive a packet from the transaction layer of the first device, where the packet is a packet that is of a first application and that is sent to a second device. When at least one first transport TP connection has been established between the transport layer of the first device and a transport layer of the second device, the transceiver unit 1010 is configured to send first indication information to the transaction layer of the first device, where the first indication information indicates that the at least one first TP connection is used to transmit the packet of the first application. The transceiver unit 1010 is configured to send the packet of the first application to the transport layer of the second device over the at least one first TP connection, where the at least one first TP connection is a TP connection established by the transport layer of the first device to transmit a packet of a second application.

For example, with reference to FIG. 5, the transceiver unit 1010 may be configured to perform S510, S521, S522, S524, S525, and S530, and the processing unit 1020 may be configured to perform S520 and S523.

It should be noted that the apparatus in FIG. 10 may also be configured to perform method steps in variations of embodiments shown in the foregoing accompanying drawings. Details are not described herein again.

In another example, the packet transmission apparatus 1000 may be used in a second device, and the packet transmission apparatus 1000 may be configured to perform the foregoing packet transmission method, for example, configured to perform the method shown in FIG. 5. The packet transmission apparatus 1000 includes a transaction layer and a transport layer.

A transceiver unit 1030 is configured to receive a packet of a first application from the transport layer of the first device.

For example, with reference to FIG. 5, the transceiver unit 1010 may be configured to perform S522, S524, S525, and S530.

It should be noted that the apparatus in FIG. 10 may also be configured to perform method steps in variations of embodiments shown in the foregoing accompanying drawings. Details are not described herein again.

An embodiment of this application further provides a chip system 1100. As shown in FIG. 11, the chip system 1100 includes at least one processor and at least one interface circuit. For example, when the chip system 1100 includes one processor and one interface circuit, the processor may be a processor 1110 shown in a solid line box (or a processor 1110 shown in a dashed line box) in FIG. 11, and the interface circuit may be an interface circuit 1120 shown in a solid line box (or an interface circuit 1120 shown in a dashed line box) in FIG. 11.

When the chip system 1100 includes two processors and two interface circuits, the two processors include a processor 1110 shown in a solid line box and a processor 1110 shown in a dashed line box in FIG. 11, and the two interface circuits include an interface circuit 1120 shown in a solid line box and an interface circuit 1120 shown in a dashed line box in FIG. 11. This is not limited. The processor 1110 and the interface circuit 1120 may be interconnected through a line. For example, the interface circuit 1120 may be configured to receive a signal (for example, instructions stored in a memory). For another example, the interface circuit 1120 may be configured to send a signal to another apparatus (for example, the processor 1110).

For example, the interface circuit 1120 may read the instructions stored in the memory, and send the instructions to the processor 1110. When the instructions are executed by the processor 1110, a packet transmission apparatus may be enabled to perform the steps in the foregoing embodiment. Certainly, the chip system 1100 may further include another discrete component. This is not specifically limited in embodiments of this application.

Another embodiment of this application further provides a computer-readable storage medium. The computer-readable storage medium stores instructions. When the instructions are run on a packet transmission apparatus, the packet transmission apparatus performs the steps performed by the packet transmission apparatus in the method procedure shown in the foregoing method embodiment. In some embodiments, the disclosed methods may be implemented as computer program instructions encoded in a machine-readable format on a computer-readable storage medium or encoded on another non-transitory medium or product.

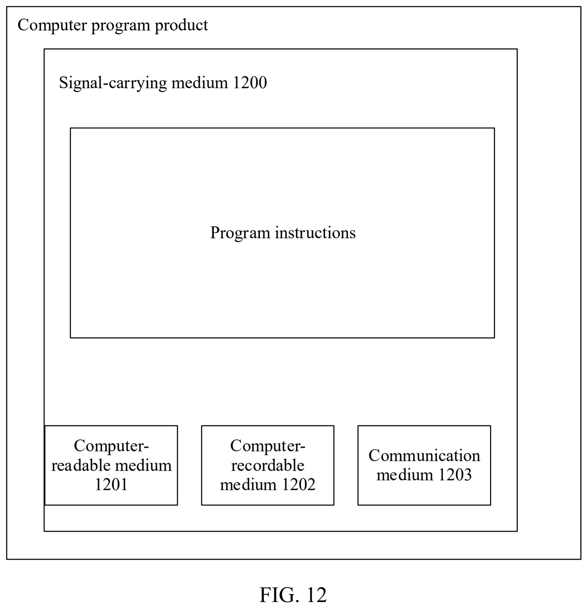

FIG. 12 schematically shows a conceptual partial view of a computer program product according to an embodiment of this application. The computer program product includes a computer program for executing a computer process on a computer device.

In an embodiment, the computer program product is provided via a signal-carrying medium 1200. The signal-carrying medium 1200 may include one or more program instructions. When the program instructions are run by one or more processors, functions or some functions described for FIG. 5 or FIG. 9 may be provided. Therefore, for example, one or more features of S510 to S530 in FIG. 5 may be borne by one or more instructions associated with the signal-carrying medium 1200. In addition, the program instructions in FIG. 12 are also described as example instructions.

In some examples, the signal-carrying medium 1200 may include a computer-readable medium 1201, for example but not limited to, a hard disk drive, a compact disk (CD), a digital video disc (DVD), a digital tape, a memory, a read-only memory (read-only memory, ROM), or a random access memory (random access memory, RAM).

In some implementations, the signal-carrying medium 1200 may include a computer-recordable medium 1202, for example but not limited to, a memory, a read/write (R/W) CD, or an R/W DVD.

In some implementations, the signal-carrying medium 1200 may include a communication medium 1203, for example but not limited to, a digital and/or analog communication medium (for example, an optical fiber, a waveguide, a wired communication link, or a wireless communication link). The signal-carrying medium 1200 may be conveyed by a communication medium 1203 in a wireless form (for example, a wireless communication medium that complies with the IEEE 1502.11 standard or another transmission protocol). The one or more program instructions may be, for example, computer-executable instructions or logic implementation instructions.

In some examples, for example, a packet transmission apparatus described for FIG. 5 may be configured to provide various operations, functions, or actions in response to one or more program instructions in the computer-readable medium 1201, the computer-recordable medium 1202, and/or the communication medium 1203.

It should be understood that the arrangement described herein is merely used as an example. Therefore, a person skilled in the art will understand that other arrangements and other elements (for example, machines, interfaces, functions, sequences, and function groups) can be used instead, and some elements may be omitted together based on a desired result. In addition, many of the described elements are functional entities that can be implemented as discrete or distributed components, or implemented in any appropriate combination at any appropriate location in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet transmission method, applied to a first device, wherein the first device comprises a transaction layer and a transport layer, and the method comprises:
receiving, by the transport layer of the first device, a packet from the transaction layer of the first device, wherein the packet is a packet that is of a first application and that is to be sent to a second device;
sending, by the transport layer of the first device, first indication information to the transaction layer of the first device when at least one first transport TP connection has been established between the transport layer of the first device and a transport layer of the second device, wherein the first indication information indicates that the at least one first TP connection is used to transmit the packet of the first application; and
sending, by the transport layer of the first device, the packet of the first application to the transport layer of the second device over the at least one first TP connection, wherein the at least one first TP connection is a TP connection used by the transport layer of the first device to transmit a packet of a second application.

2. The method according to claim 1, wherein when no TP connection is established between the transport layer of the first device and the transport layer of the second device, the method further comprises:
obtaining, by the transport layer of the first device, internet protocol IP address information of the second device; and
establishing, by the transport layer of the first device, at least one second TP connection between the transport layer of the first device and the transport layer of the second device based on the IP address information of the second device, wherein the at least one second TP connection is used to transmit the packet of the first application.

3. The method according to claim 1 or 2, wherein sending, by the transport layer of the first device, the packet of the first application to the transport layer of the second device over the at least one first TP connection comprises:
sending, by the transport layer of the first device, the packet of the first application to the transport layer of the second device over a TP connection with lightest load in the at least one first TP connection.

4. The method according to any one of claims 1 to 3, wherein the method further comprises:
receiving, by the transport layer of the first device, an acknowledgment message from the transport layer of the second device, wherein the acknowledgment message indicates whether the packet of the first application is successfully executed by a transaction layer of the second device.

5. The method according to claim 4, wherein if the acknowledgment message is a transaction acknowledgment TAACK, the acknowledgment message indicates that the transaction layer of the second device successfully executes the packet of the first application, and the method further comprises:
sending, by the transport layer of the first device, a completion queue entry CQE to the transaction layer of the first device, wherein the CQE indicates that the packet of the first application is successfully transmitted.

6. The method according to claim 4, wherein if the first response message is a transaction negative acknowledgment TANAK, the first response message indicates that the transaction layer of the second device fails to execute the packet of the first application, and the method further comprises:
sending, by the transport layer of the first device, the TANAK to the transaction layer of the first device; and
receiving, by the transport layer of the first device, the packet of the first application from the transaction layer of the first device, and resending the packet of the first application to the transport layer of the second device.

7. The method according to any one of claims 1 to 6, wherein receiving, by the transport layer of the first device, the packet from the transaction layer of the first device comprises:
receiving, by the transport layer of the first device, a send queue entry SQE from the transaction layer of the first device, wherein a destination address of the SQE is an address of the second device, and the SQE carries the packet that is of the first application and that is sent to the second device.

8. The method according to claim 7, wherein receiving, by the transport layer of the first device, the SQE from the transaction layer of the first device comprises:
receiving, by the transport layer of the first device, the SQE from at least one transmit interface of the first device.

9. The method according to claim 7 or 8, wherein before sending, by the transport layer of the first device, the packet of the first application to the transport layer of the second device over the at least one first TP connection, the method further comprises:
determining, by the transport layer of the first device, the at least one first TP connection based on a destination entity identifier DEID carried in the SQE.

10. A packet transmission apparatus, wherein the apparatus comprises a transaction layer and a transport layer, and the apparatus comprises:
a transport layer receiving module, configured to receive a packet from the transaction layer, wherein the packet is a packet that is of a first application and that is to be sent to a second device; and
a transport layer sending module, configured to send first indication information to the transaction layer when at least one first transport TP connection has been established between the transport layer of the apparatus and a transport layer of the second device, wherein the first indication information indicates that the at least one first TP connection is used to transmit the packet of the first application, wherein
the transport layer sending module is further configured to send the packet of the first application to the transport layer of the second device over the at least one first TP connection; and
the at least one first TP connection is a TP connection used by the transport layer of the apparatus to transmit a packet of a second application.

11. The apparatus according to claim 10, wherein when no TP connection is established between the transport layer of the apparatus and the transport layer of the second device, the transport layer receiving module is further configured to obtain internet protocol IP address information of the second device; and
the apparatus further comprises:
a transport layer processing module, configured to establish at least one second TP connection between the transport layer of the apparatus and the transport layer of the second device based on the IP address information of the second device, wherein the at least one second TP connection is used to transmit the packet of the first application.

12. The apparatus according to claim 10 or 11, wherein that the transport layer sending module sends the packet of the first application to the transport layer of the second device over the at least one first TP connection comprises:
the transport layer sending module sends the packet of the first application to the transport layer of the second device over a TP connection with lightest load in the at least one TP connection.

13. The apparatus according to any one of claims 10 to 12, wherein the transport layer receiving module is further configured to receive an acknowledgment message from the transport layer of the second device, wherein the acknowledgment message indicates whether the packet of the first application is successfully executed by a transaction layer of the second device.

14. The apparatus according to claim 13, wherein if the acknowledgment message is a transaction acknowledgment TAACK, the acknowledgment message indicates that the transaction layer of the second device successfully executes the packet of the first application, and the transport layer sending module is further configured to send a completion queue entry CQE to the transaction layer of the first device, wherein the CQE indicates that the packet of the first application is successfully transmitted.

15. The apparatus according to claim 13, wherein if the first response message is a transaction negative acknowledgment TANAK, the first response message indicates that the transaction layer of the second device fails to execute the packet of the first application, and the transport layer sending module is further configured to send the TANAK to the transaction layer of the first device;
the transport layer receiving module is further configured to receive the packet of the first application from the transaction layer of the first device; and
the transport layer sending module is further configured to resend the packet of the first application to the transport layer of the second device.

16. The apparatus according to any one of claims 10 to 15, wherein that the transport layer receiving module receives the packet from the transaction layer comprises:
the transport layer receiving module is configured to receive a send queue entry SQE from the transaction layer, wherein a destination address of the SQE is an address of the second device, and the SQE carries the packet that is of the first application and that is sent to the second device.

17. The apparatus according to claim 16, wherein that the transport layer receiving module receives the SQE from the transaction layer comprises:
the transport layer receiving module of the apparatus receives the SQE from at least one transmit interface of the apparatus.

18. The apparatus according to claim 16 or 17, wherein the apparatus comprises:
the transport layer processing module, configured to: before the transport layer sending module sends the packet of the first application to the transport layer of the second device over the at least one first TP connection, determine the at least one first TP connection based on a destination entity identifier DEID carried in the SQE.

19. A packet transmission apparatus, comprising a processor, configured to read instructions stored in a memory, wherein when the processor executes the instructions, the memory access apparatus is enabled to implement the method according to any one of claims 1 to 9.

20. A packet transmission apparatus, comprising a unit configured to perform the method according to any one of claims 1 to 9.

21. A chip, comprising:
at least one processing core, configured to perform the method according to any one of claims 1 to 9.

22. A computer device, comprising the chip according to claim 21.

23. A computer program product, wherein the computer program product comprises computer program code, and when the computer program code is run on a computer, the method according to any one of claims 1 to 9 is performed.

24. A computer-readable storage medium, comprising a computer program, wherein when the computer program is run on a computer device, a processing module in the computer device is enabled to perform the method according to any one of claims 1 to 9.

25. A packet transmission system, comprising a first device configured to perform the method according to any one of claims 1 to 9 and a second device configured to receive a packet.
